# EUROPEAN PATENT APPLICATION

(11) **EP 4 207 902 A1**
(43) Date of publication of application: **05.07.2023**
(21) Application number: 21861157.2
(22) Date of filing: 03.08.2021
(51) Int. Cl.: H04W 72/04, H04W 84/06

(54) **TERMINAL, WIRELESS COMMUNICATION METHOD, AND BASE STATION**

(30) Priority: 31.08.2020 JP 2020146155
(71) Applicant: NTT DOCOMO, INC., Tokyo 100-6150 (JP)
(72) Inventor: HOKAZONO, Yuki, Tokyo 100-6150 (JP); KISHIYAMA, Yoshihisa, Tokyo 100-6150 (JP)
(74) Representative: Hoffmann Eitle
(86) International application number: PCT/JP2021/028854
(87) International publication number: WO 2022/044729

(57) **Abstract**

A terminal is provided. The terminal includes a communication unit configured to perform wireless communication with a non-terrestrial network using a radio resource determined by the non-terrestrial network, based on a radio resource used for wireless communication in a terrestrial network.

## Description

### [FIELD OF THE INVENTION]

The present invention relates to a terminal, a wireless communication method, and a base station.

### [BACKGROUND OF THE INVENTION]

In NR (New Radio)(also referred to as "5G" ), which is a successor system of LTE (Long Term Evolution), in a standardization project, 3GPP (Third Generation Partnership Project), technical specifications are being discussed and developed for technologies that satisfy the following requirements: a high capacity system, high-speed data transmission rate, low delay, simultaneous connection of multiple terminals, low cost, power saving, etc.

In addition, in recent years, a technology has been discussed that enables coverage of areas such as mountainous regions, remote regions, and the sea by non-terrestrial networks (NTNs) using a high altitude platform station (HAPS) or a high altitude pseudo satellite (for example, see Non-Patent Documents 1 and 2).

### [Citation List]

### [Non-Patent Document]

[Non-Patent Document 1] 3GPP TR 38.821 V16.0.0 (2019-12)
[Non-Patent Document 2] Konishi, et al., "A Study of Downlink Spectrum Sharing in HAPS Mobile Communication System", the Institute of Electronics, Information and Communication Engineers (IEICE) General Conference, B-17-1, 2020

### SUMMARY OF THE INVENTION

### [TECHNICAL PROBLEM]

According to conventional technologies, in a case where wireless communication services are provided by a non-terrestrial network, for example, at events such as concerts, during disasters, and over a wide area of the IoT (Internet of Things), radio wave interference with a conventional terrestrial network may occur and the quality of communication may degrade.

The purpose of this disclosure is to provide a technique that can reduce radio wave interference between a non-terrestrial network and a terrestrial network.

### [SOLUTION TO PROBLEM]

A terminal is provided. The terminal includes a communication unit configured to perform wireless communication with a non-terrestrial network using a radio resource determined by the non-terrestrial network, based on a radio resource used for wireless communication in a terrestrial network.

### [ADVANTAGEOUS EFFECTS OF INVENTION]

According to the disclosed technique, radio wave interference can be reduced between a non-terrestrial network and a terrestrial network.

### BRIEF DESCRIPTION OF THE DRAWINGS

[Fig. 1] Fig. 1 is a drawing illustrating a system configuration of a wireless communication system 1 according to an embodiment of the present invention.
[Fig. 2A] Fig. 2A is a drawing illustrating an example (No.1) of a configuration of a non-terrestrial network 60 according to an embodiment of the present invention.
[Fig. 2B] Fig. 2B is a drawing illustrating an example (No.2) of a configuration of a non-terrestrial network 60 according to an embodiment of the present invention.
[Fig. 3] Fig. 3 is a drawing illustrating an example of a functional structure of a user terminal 10 according to an embodiment of the present invention.
[Fig. 4] Fig. 4 is drawing illustrating an example of a functional structure of the non-terrestrial network 60 according to an embodiment of the present invention.
[Fig. 5] Fig. 5 is a sequence diagram illustrating an example of processing in a wireless communication system 1 according to an embodiment of the present invention.
[Fig. 6] Fig. 6 is a drawing illustrating a communication area of the non-terrestrial network 60 and each cell of the terrestrial network 50 according to an embodiment of the present invention.
[Fig. 7] Fig. 7 is a drawing illustrating an example of adjusting frequencies used in the non-terrestrial network 60 and the terrestrial network 50 according to an embodiment of the present invention.
[Fig. 8] Fig. 8 is a drawing illustrating an example in which frequencies are shared in communications in the opposite direction between the non-terrestrial network 60 and the terrestrial network 50 according to an embodiment of the present invention.
[Fig. 9] Fig. 9 is a drawing illustrating an example of the hardware configuration of each device of the non-terrestrial network 60, each device of the terrestrial network 50, and the user terminal 10 according to an embodiment of the present invention.

### DETAILED DESCRIPTION OF THE PREFERRED EMBODIMENTS

In the following, referring to the drawings, one or more embodiments of the present disclosure will be described. Note that the embodiments described below are examples. Embodiments of the present disclosure are not limited to the following embodiments.

In the wireless communication system according to an embodiment of the present disclosure, known techniques may be appropriately used. The known techniques may be, for example, 5G and Beyond 5G. Note that disclosed techniques of the present invention may be applicable not only to the 5G and the like. but also to any wireless communication system.

### (System configuration)

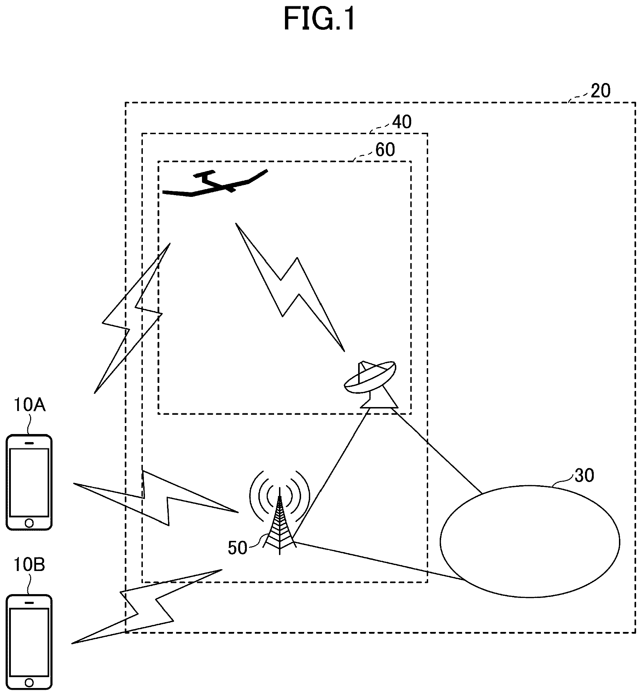

Fig. 1 is a drawing illustrating a system configuration of a wireless communication system 1 according to an embodiment of the present invention. The wireless communication system 1 according to an embodiment of the present invention includes user terminals 10A and 10B (hereinafter, also simply referred to as "user terminals 10" when there is no need to distinguish between them), and a communication network 20. Note that the number of user terminals 10 is not limited to the example in Fig. 1.

The user terminal 10 may be a communication apparatus that includes a wireless communication function, such as a smart-phone, a mobile phone, a tablet, a wearable terminal, a communication module for M2M (Machine-to-Machine), or the like. Note that the user of the user terminal 10 may sign a predetermined contract with a mobile communication carrier (Mobile Network Operator, MNO) so that the user can use various communication services of the communication network 20 provided by the mobile communication carrier, or the like. In the user terminal 10, for example, a medium for identifying a subscriber (for example, a SIM (Subscriber Identity Module Card) card) distributed (lent) by the mobile communication carrier, may be inserted.

The user terminal 10 may use various communication services provided by the communication network 20 by using the identification information recorded in the SIM card. The various communication services may include data services in which data is transmitted and received over the Internet. In addition, the various communication services may include voice services for making and receiving voice calls. Note that the voice services may include, for example, a service that enables outgoing and incoming of a voice call using VoNR (Voice over New Radio) which is a voice call technology on the 5G network. In addition, the voice services may include, for example, a service that enables outgoing and incoming of a voice call by switching a communication network accommodating the user terminal 10 to a communication network of 4G or 3G (by performing the fallback), at the time of outgoing and incoming of the voice call.

### ((Communication Network 20))

The communication network 20 provides various services such as voice services and data services to the user terminal 10. The communication network 20 includes a core network 30 and a RAN (Radio Access Network) 40. The core network 30 may, for example, manage information of users (subscribers) of user terminals 10, manage sessions such as voice calls, transmit data via the Internet, amongst other things.

The communication network 20 may be, for example, an NSA (Non-Stand Alone) type 5G network using 4G (including LTE or LTE-A) EPC (Evolved Packet Core) as the core network 30 and using en-gNB, which is a 5G base station, for some base stations as the RAN 40. In this case, the communication network 20 may, for example, transmit and receive control signals using eNB, which is a 4G base station, and transmit and receive data using en-gNB, which is a 5G base station.

In addition, the communication network 20 may be an SA (Stand Alone) type 5G network using a 5G core network (5GC) as the core network 30 and using gNB, which is a 5G base station, as at least some base stations as the RAN 40. In this case, the communication network 20 may, for example, transmit and receive control signals and data using gNB.

The RAN 40 includes a terrestrial network 50 and a non-terrestrial network 60. The terrestrial network 50 is, for example, a network that performs wireless communication directly with the user terminal 10 via a base station installed in a facility on the ground.

The Non-Terrestrial Network (NTN) 60 is, for example, a network that performs wireless communication with the user terminal 10 via an object (a non-terrestrial object) other than an object placed on the ground. The non-terrestrial network 60 may use, for example, a high-altitude pseudo-satellite (HAPS, High Altitude Platform Station, or High Altitude Pseudo Satellite), a flying vehicle such as an unmanned aerial vehicle, or a spacecraft such as a satellite, as a relay (repeater, relay station) or base station. Note that in a case where a HAPS is used that resides in a fixed location at an altitude of approximately 20 km, the non-terrestrial network 60 can, for example, form a wide coverage area on the ground (land) with a cell radius of 50 km or more.

### <Example of transparent type>

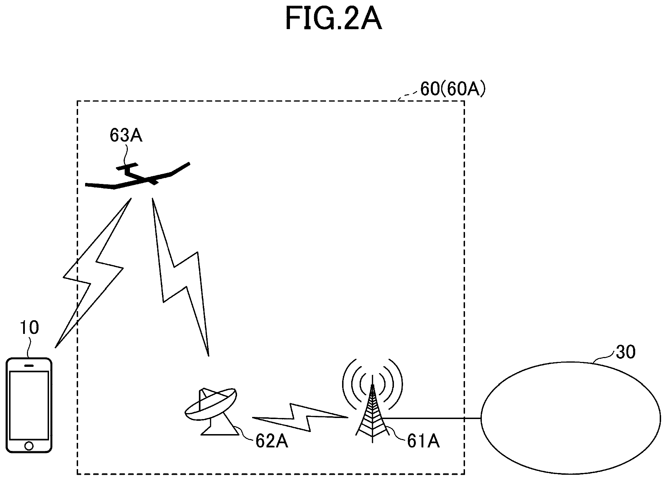

Fig. 2A is a drawing illustrating an example (No.1) of a configuration of a non-terrestrial network 60 according to an embodiment of the present invention. The non-terrestrial network 60 may be a transparent type NTN in which a non-terrestrial object has a repeater, as shown in Fig. 2A. In the example of Fig. 2A, the non-terrestrial network 60 (60A) includes a base station 61A placed on the ground, an NTN gateway 62A placed on the ground, and a non-terrestrial object 63A.

In the example of Fig. 2A, data transmitted from the core network 30 to the user terminal 10 is first transmitted from the core network 30 to the base station 61A. The base station 61A then transmits the received data to the non-terrestrial object 63A via the NTN Gateway 62A using downlink radio signals. The non-terrestrial object 63A then relays (transfers) the received downlink radio signals to the user terminal 10 by using the relay.

In addition, data to be transmitted from the user terminal 10 to the core network 30 is first transmitted from the user terminal 10 to the non-terrestrial object 63A by using uplink radio signals. The non-terrestrial object 63A then relays (transfers) the received uplink radio signals to the NTN gateway 62A by using the relay. The NTN gateway 62A then transmits the received uplink radio signals wirelessly or in a wired method to the base station 61A. The base station 61A then transmits the data received from the NTN gateway 62A to the core network 30.

### <Example of regenerative type>

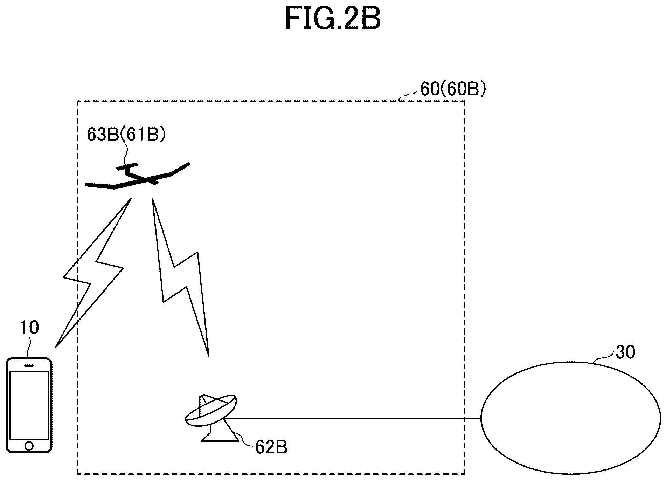

Fig. 2B is a drawing illustrating an example (No.2) of a configuration of a non-terrestrial network 60 according to an embodiment of the present invention. The non-terrestrial network 60 may be a regenerative-type NTN in which a non-terrestrial object includes a base station, as shown in Fig. 2B. In the example of Fig. 2B, the non-terrestrial network 60 (60B) includes a NTN gateway 62B placed on the ground and a non-terrestrial object 63B that is provided with a base station 61B.

In the example of Fig. 2B, data transmitted from the core network 30 to the user terminal 10 is first transmitted by radio waves (radio signals) from the core network 30 to the base station 61B of the non-terrestrial object 63B via the NTN gateway 62B. The base station 61B of the non-terrestrial object 63B then generates downlink radio signals, based on the received data, and transmits the generated radio signals to the user terminal 10.

In addition, data to be transmitted from the user terminal 10 to the core network 30 is first transmitted from the user terminal 10 to the non-terrestrial object 63B by using uplink radio signals. The base station 61B of the non-terrestrial object 63B then transmits the received data to the core network 30 via the NTN gateway 62B.

### (Apparatus configuration)

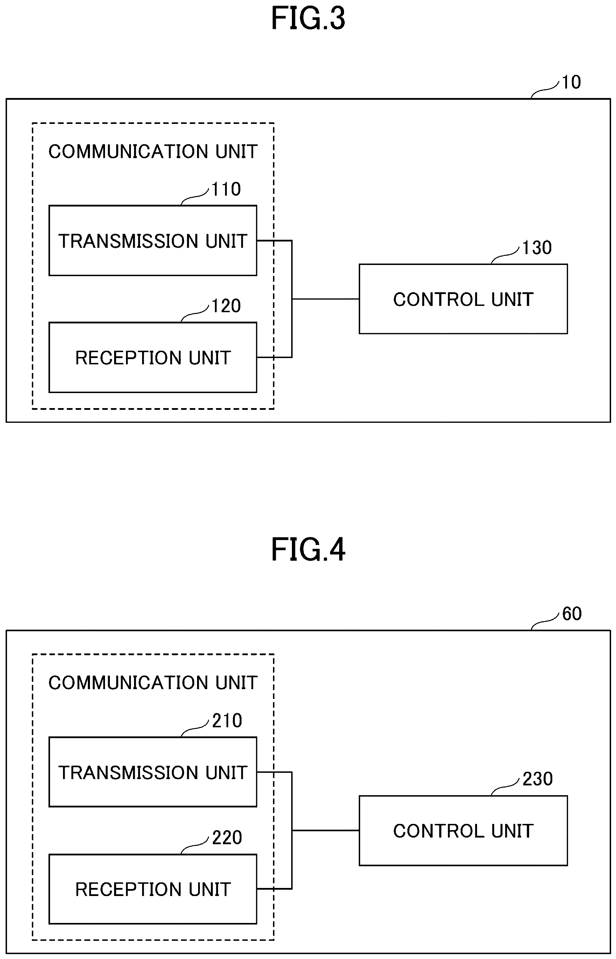

An example of the functional configuration of the user terminal 10 and the non-terrestrial network 60 will be described with reference to Fig. 3 and Fig. 4.

### <User terminal 10>

Fig. 3 is a drawing illustrating an example of a functional structure of the user terminal 10 according to an embodiment of the present invention. As shown in Fig. 3, the user terminal 10 includes a transmission unit 110, a reception unit 120, and a control unit 130. Each of the units may be implemented, for example, by cooperation between hardware such as a processor of the user terminal 10, and software installed in the user terminal 10.

Note that the functional structure illustrated in Fig. 3 is merely an example. Functional divisions and names of functional units may be any division and name as long as operations are performed according to an embodiment of the present invention. For example, the transmission unit 110 and the reception unit 120 may be collectively referred to as a communication unit.

The transmission unit 110 transmits data to the communication network 20. The reception unit 120 receives data from the communication network 20. In addition, the reception unit 120 receives information indicating a radio resource for performing wireless communication with the non-terrestrial network 60, the radio resource being determined based on information related to a radio resource used for wireless communication in the terrestrial network 50, for example.

The control unit 130 performs various controls in the user terminal 10. The control unit 130 causes the transmission unit 110 and the reception unit 120 to perform wireless communication with the non-terrestrial network 60, for example, by using the radio resource in accordance with the information, received by the reception unit 120, indicating the radio resource for performing wireless communication with the non-terrestrial network 60.

### <Non-terrestrial network 60>

Fig. 4 is drawing illustrating an example of a functional structure of the non-terrestrial network 60 according to an embodiment of the present invention. As shown in Fig. 4, a device such as a base station included in a non-terrestrial network 60 includes a transmission unit 210, a reception unit 220, and a control unit 230. Each of the units may be implemented, for example, by cooperation between hardware such as a processor of the device such as a base station included in the non-terrestrial network 60 and software installed in the device.

Note that functional structure illustrated in Fig. 4 is merely an example. Functional divisions and names of functional units may be any division and name as long as operations are performed according to an embodiment of the present invention. For example, the transmission unit 210 and the reception unit 220 may be collectively referred to as a communication unit.

The transmission unit 210 transmits data to the user terminal 10 and the core network 30. The reception unit 220 receives data from the user terminal 10 and the core network 30. The reception unit 220 receives from the terrestrial network 50, for example, information related to a radio resource used for wireless communication in the terrestrial network 50.

The control unit 230 performs various controls in the non-terrestrial network 60. The control unit 230 determines a radio resource for performing wireless communication with the user terminal 10, based on, for example, information received by the reception unit 22, related to a radio resource used for wireless communication in the terrestrial network 50.

### (Processing)

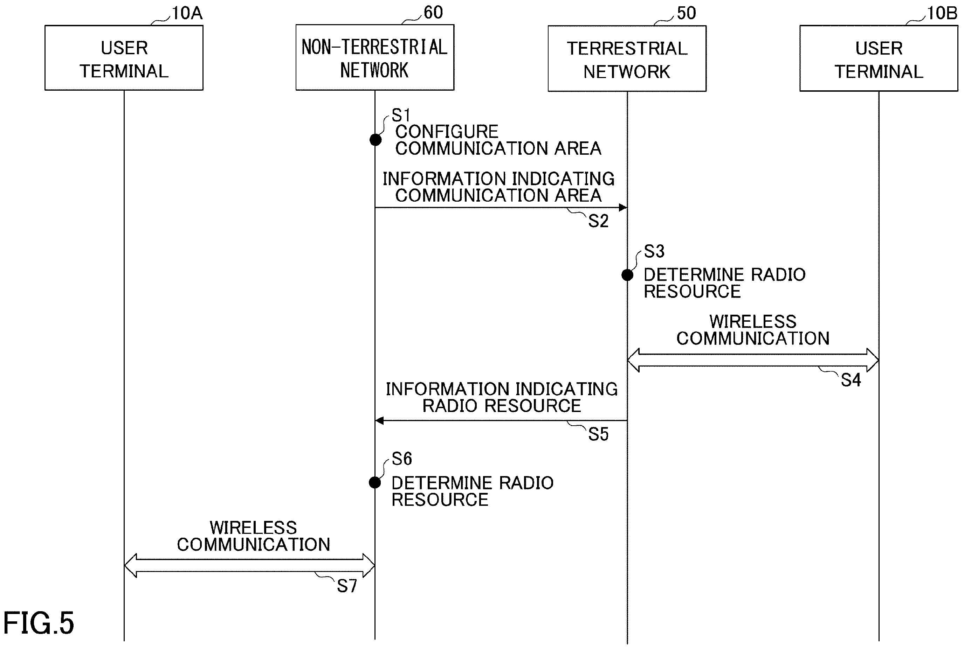

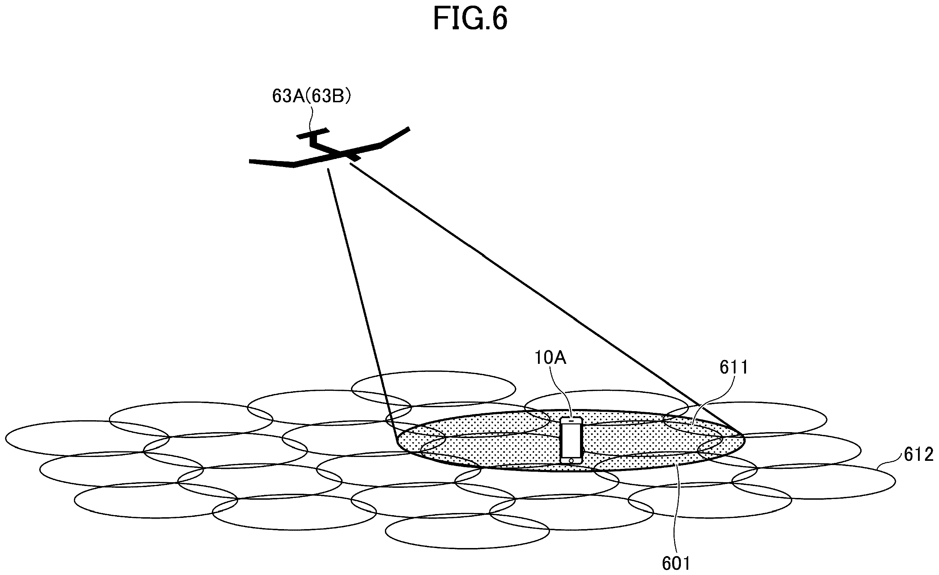

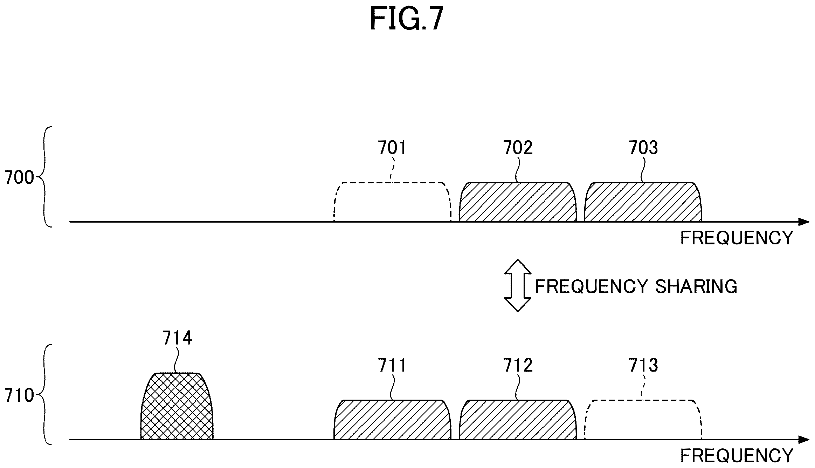

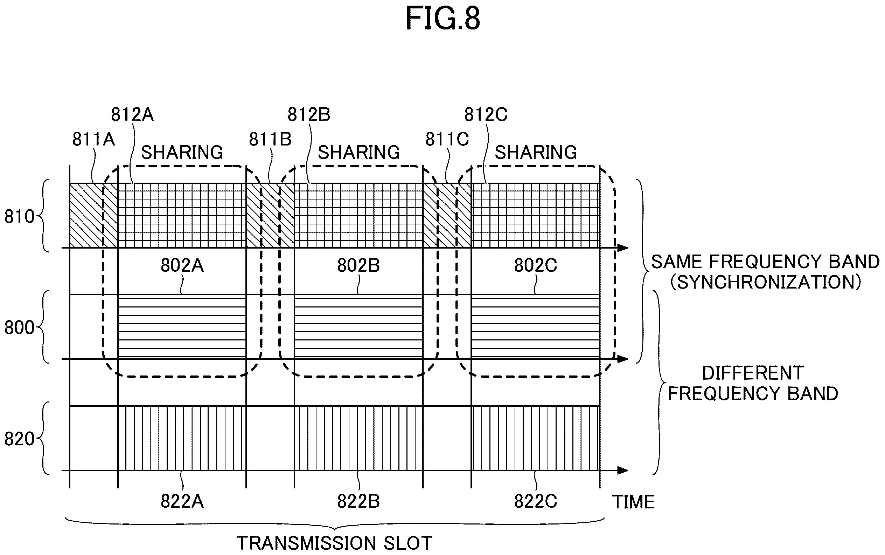

An example of the processing of the wireless communication system 1 according to an embodiment of the present invention will be described with reference to Fig. 5. Fig. 5 is a sequence diagram illustrating an example of processing in a wireless communication system 1 according to an embodiment of the present invention. Fig. 6 is a drawing illustrating a communication area of the non-terrestrial network 60 and each cell of the terrestrial network 50 according to an embodiment of the present invention. Fig. 7 is a drawing illustrating an example of adjusting frequencies used in the non-terrestrial network 60 and the terrestrial network 50 according to an embodiment of the present invention. Fig. 8 is a drawing illustrating an example in which frequencies are shared in communications in the opposite direction between the non-terrestrial network 60 and the terrestrial network 50 according to an embodiment of the present invention. For the following processing procedures, the order of processing may be changed as long as there is no conflict.

Hereinafter, an example in which the user terminal 10A communicates with the core network 30 using the non-terrestrial network 60 will be described.

In step S1, the non-terrestrial network 60 configures a communication area in accordance with the position of the user terminal 10A when connecting the communication between the user terminal 10A and the core network 30. Here, the non-terrestrial network 60 configures the communication area in accordance with the position of the user terminal 10A in a case where events occur, such as outgoing calls from the user terminal 10A, incoming calls to the user terminal 10A, data acquisition requests from the user terminal 10A, and data transmission requests to the user terminal 10A, for example.

The non-terrestrial network 60 may transmit radio waves in the form of beams in the direction of the user terminal 10A by Massive MIMO (Multiple Input Multiple Output) using beamforming techniques with large-scale array antennas, for example. In this case, the non-terrestrial network 60 may transmit radio waves in the form of beams in the direction of the user terminal 10A, for example, by controlling the amplitude and phase of signals transmitted from each antenna element.

In the example of Fig. 6, it is shown that the non-terrestrial object 63A (63B) in the non-terrestrial network 60 configures a predetermined range (location) in which the user terminal 10A is located as the communication area 601 when communicating with the user terminal 10A. In the example of FIG. 6, a cell 611 of a particular base station in the terrestrial network 50 is included in the communication area 601 of the non-terrestrial network 60. On the other hand, a cell 612 of another base station in the terrestrial network 50 is not included in the communication area 601 of the non-terrestrial network 60.

In step S2, the non-terrestrial network 60 transmits information related to wireless communication via the non-terrestrial network 60 to the terrestrial network 50.

Here, the non-terrestrial network 60 may cooperate with the terrestrial network 50 to perform interference avoidance in accordance with the location of the user terminal 10A. In this case, the non-terrestrial network 60 and the terrestrial network 50 may perform interference avoidance processing (locally) within the communication area (an area to which the non-terrestrial object 63A (63B) in the non-terrestrial network 60 directs the beam) configured by the non-terrestrial network 60. Accordingly, for example, because performing processing such as deactivation of a component carrier described below in all base stations of the terrestrial network 50 is unnecessary, the frequency utilization efficiency of the entire wireless communication system 1 can be improved. Note that, when changing the communication area (an area to which interference avoidance is applied), the non-terrestrial network 60 may transmit and receive control signals and synchronization signals with the terrestrial network 50 to perform interference avoidance according to the location.

The non-terrestrial network 60 may, for example, transmit information indicating the configured communication area to the terrestrial network 50 in order to perform interference avoidance according to the location. In this case, the non-terrestrial network 60 may transmit, as information indicating the communication area, information based on the direction of the user terminal 10A detected at the time of beamforming to the terrestrial network 50.

In addition, the non-terrestrial network 60 may transmit, as information indicating the communication area, for example, identification information of the base station of the terrestrial network 50 in which the user terminal 10A is located, obtained from the user terminal 10A to the terrestrial network 50 in order to perform interference avoidance according to the location.

In addition, the non-terrestrial network 60 may transmit, as information indicating the communication area, for example, information based on the position information obtained from the user terminal 10A to the terrestrial network 50 in order to perform interference avoidance according to the location. In this case, the non-terrestrial network 60 may obtain from the user terminal 10 the information based on the position information of the user terminal 10 measured using a satellite positioning system such as GPS (Global Positioning System).

In addition, the non-terrestrial network 60 may transmit to the terrestrial network 50 information related to radio resources that can be used by the non-terrestrial network 60 in the configured communication area (e.g., requirements related to component carriers used in each of the terrestrial network 50 and the non-terrestrial network 60). In this case, the non-terrestrial network 60 may transmit to the terrestrial network 50 information indicating radio resources that can be used in the uplink and information indicating radio resources that can be used in the downlink, for example.

In step S3, the terrestrial network 50 determines radio resources used by the terrestrial network 50 in each cell of the terrestrial network 50 included in the communication area of the non-terrestrial network 60. Here, the radio resources used in each cell included in the communication area of the non-terrestrial network 60 may be pre-configured (registered) to the terrestrial network 50.

In addition, in a case where information, indicating the radio resources that can be used by the non-terrestrial network 60 in the communication area, is indicated by the non-terrestrial network 60, the terrestrial network 50 may determine radio resources to be used by the terrestrial network 50 in each cell included in the communication area, based on the indicated information.

### (Example of adjusting frequencies to be used)

Fig. 7 shows an example of graph 700 showing frequencies used by the non-terrestrial network 60 and graph 710 showing frequencies used by the terrestrial network 50 in the communication area of the non-terrestrial network 60. In the example of Fig. 7, the terrestrial network 50 has determined that, in each cell of the terrestrial network 50, at least a portion of each cell being included in the communication area of the non-terrestrial network 60, frequency (component carrier) 711 (701), frequency 712 (702), and frequency 714 is continued to be used (component carrier is to be activated), and use of frequency 713 (703) is to be suspended (component carrier is to be deactivated). According to the above, the quality of wireless communication of the non-terrestrial network 60 using the frequency 703 (713) can be secured (radio resources that can guarantee the quality can be secured). Note that, in a case where each cell is no longer included in the communication area of the non-terrestrial network 60, the terrestrial network 50 may resume the use of the frequency 713 (703) in each cell.

In step S4, the terrestrial network 50 performs wireless communication with the user terminal 10B and the like in each cell included in the communication area of the non-terrestrial network 60 using the radio resources determined in step S3. Here, the terrestrial network 50 may indicate, to the user terminal 10B, information specifying radio resources to be used in the uplink and downlink of voice services and the uplink and downlink of data services via a signal for control (control signal). The user terminal 10B may then perform wireless communication with the terrestrial network 50 using the radio resources specified by the terrestrial network 50.

In step S5, the terrestrial network 50 transmits to the non-terrestrial network 60 information related to the radio resources, determined in step S3, to be used by the terrestrial network 50 in each cell included in the communication area of the non-terrestrial network 60 (for example, requirements related to component carriers used in each of the terrestrial network 50 and the non-terrestrial network 60). Here, the terrestrial network 50 may transmit to the non-terrestrial network 60, for example, information indicating radio resources used by the terrestrial network 50 in the uplink in each cell and information indicating radio resources used by the terrestrial network 50 in the downlink.

In step S6, the non-terrestrial network 60 determines radio resources used by the non-terrestrial network 60, based on the information indicating the radio resources used by the terrestrial network 50 in each cell of the terrestrial network 50 included in the communication area of the non-terrestrial network 60. According to the above, interference of radio waves to the terrestrial network 50 can be reduced.

### (Example of adjusting frequencies to be used)

The non-terrestrial network 60 and the terrestrial network 50 may perform frequency sharing utilizing component carriers and interference avoidance utilizing component carriers. The frequency sharing utilizing component carriers means, for example, that the non-terrestrial network 60 and the terrestrial network 50 use at least partially the same frequency (component carrier, carrier, predetermined bandwidth, frequency block, radio frequency band) at the same time to each perform wireless communication with the user terminal 10. In addition, the interference avoidance utilizing component carriers means, for example, that the non-terrestrial network 60 and the terrestrial network 50 each perform wireless communication with the user terminal 10 at the same time using at least partially different frequencies.

In this case, the non-terrestrial network 60 may determine the frequency to be used by the non-terrestrial network 60 such that the non-terrestrial network 60 does not use the frequency of the frequency band used for transmitting and receiving control signals in the terrestrial network 50. According to the above, the possibility of interference of radio waves to the terrestrial network 50 causing degradation in the quality of radio communication for making and receiving voice services and for connecting data services in the terrestrial network 50, can be further reduced.

Note that the frequency used for transmission and reception of control signals in the terrestrial network 50 is called an anchor band when the terrestrial network 50 is an NSA type, and 4G wireless communication may be used.

In the example of Fig. 7, the non-terrestrial network 60 has determined to use frequency (component carrier) 702 (712) and frequency 703 (713) (activate component carriers) in the communication area of the non-terrestrial network 60, and to suspend use (deactivate component carriers) of frequency 701 (711) and frequency 714 that is used for transmitting and receiving control signals in the terrestrial network 50.

Therefore, in the communication area of the non-terrestrial network 60, the frequency 702 (712) is shared between the non-terrestrial network 60 and the terrestrial network 50. In addition, in the communication area, the frequency 703 (713) is used only in the non-terrestrial network 60, and the frequency 711 (701) and frequency 714 are used only in the terrestrial network 50. According to the above, the quality of wireless communication in the terrestrial network 50 using frequencies 711 (701) and 714 can be ensured.

### (Example of sharing frequencies in communication in opposite direction)

The non-terrestrial network 60 and the terrestrial network 50 may share frequencies in communication in the opposite direction. According to the above, the radio wave interference between the non-terrestrial network and the terrestrial network can be reduced. Note that the non-terrestrial network 60 may share the frequency shared by the non-terrestrial network 60 and the terrestrial network 50 by communication in the opposite direction. In this case, in the example of Fig. 7, the frequency 702 (712) shared by the non-terrestrial network 60 and the terrestrial network 50, is shared in communication in the opposite direction. Note that the terrestrial network 50, the non-terrestrial network 60, and the user terminal 10 may perform synchronization by transmitting and receiving a synchronization signal, and schedule the timing of data transmission and reception, for example.

The non-terrestrial network 60 may determine the frequency used in the uplink of the terrestrial network 50 in each cell of the terrestrial network 50 included in the communication area of the non-terrestrial network 60, as the frequency used in the downlink of the non-terrestrial network 60, for example. According to the above, for example, it is expected that the interference of radio waves between the non-terrestrial network and the terrestrial network can be further reduced because the frequencies used by the terrestrial network 50 are shared in uplink wireless communication in the non-terrestrial network 60, which is considered to have relatively low communication volume.

In the example of Fig. 8, the graph 810 shows the time zones 811A, 811B, and 811C used in the uplink and the time zones 812A, 812B, and 812C used in the downlink by the terrestrial network 50 by TDD (time division duplex) at specific frequencies. In addition, the graph 800 shows the time zones 802A, 802B, and 802C used in the downlink by the non-terrestrial network 60 by FDD (frequency division duplex) at the specific frequencies. The time zones 812A, 812B, and 812C are the same time zones as the time zones 802A, 802B, and 802C, respectively. In addition, the graph 820 shows the time zones 822A, 822B, and 822C used in the uplink by the non-terrestrial network 60 by FDD at frequencies different from the particular frequencies.

Further, the non-terrestrial network 60 may determine the frequency used in the downlink of the terrestrial network 50 in each cell of the terrestrial network 50 included in the communication area of the non-terrestrial network 60, as the frequency used in the uplink of the non-terrestrial network 60, for example.

In a case where a propagation time difference occurs in the communication area (same cell) of the non-terrestrial network 60, the non-terrestrial network 60 may compensate for the propagation time difference using timing advance (Timing Advance), for example.

In step S7, the non-terrestrial network 60 performs communication with the user terminal 10A using the radio resources determined in step S6. Here, the non-terrestrial network 60 may indicate, to the user terminal 10A, information specifying radio resources to be used in the uplink and downlink of voice services and the uplink and downlink of data services via a signal for control. The user terminal 10A may then perform wireless communication with the non-terrestrial network 60 using the radio resources specified by the non-terrestrial network 60. Thus, the transmission unit 110 and the reception unit 120 of the user terminal 10A perform wireless communication with the non-terrestrial network 60 using the radio resources determined by the non-terrestrial network 60, based on the radio resources used for wireless communication in the terrestrial network 50.

### (Hardware structure)

In the above functional structure diagrams used for describing an embodiment of the present invention (Fig. 3 and Fig. 4), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

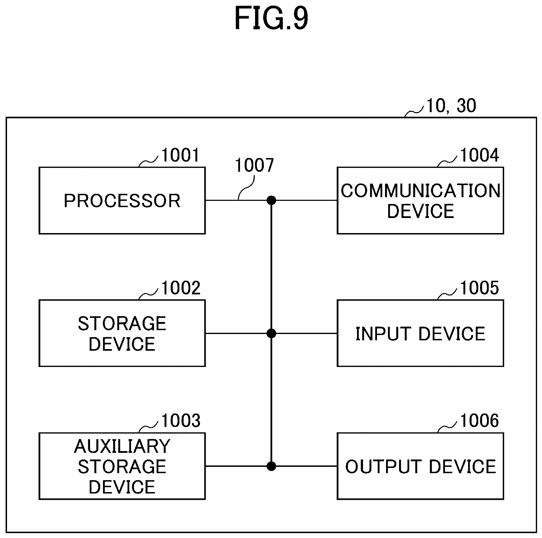

For example, each device of the non-terrestrial network 60, each device of the terrestrial network 50, and the user terminal 10, etc.,, in an embodiment of the present disclosure may function as a computer for processing the wireless communication method of the present disclosure. Fig. 9 is a drawing illustrating an example of the hardware configuration of each device of the non-terrestrial network 60, each device of the terrestrial network 50, and the user terminal 10 according to an embodiment of the present invention. Each device of the above-described non-terrestrial network 60, each device of the terrestrial network 50, and the user terminal 10 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware configuration of each device of the non-terrestrial network 60, each device of the terrestrial network 50, and the user terminal 10 may be configured to include one or more of each device shown in the figure or may be configured without some devices.

Each function of each device of the non-terrestrial network 60, each device of the terrestrial network 50, and the user terminal 10 is implemented by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 130, control unit 230, and the like, may be implemented by the processor 1001.

Further, the processor 1001 reads out a program (program code), a software module, or data from the auxiliary storage device 1003 and/or the communication device 1004, onto the storage device 1002, and performs various processes according to the program, the software module, or the data. As the program, a program is used that causes the computer to perform at least a part of operations according to an embodiment of the present invention described above, for example, the control unit 130 of the user terminal 10 illustrated in Fig. 3 may be implemented by control programs that are stored in the storage device 1002 and are executed by the processor 1001. In addition, for example, the control unit 230 of the non-terrestrial network 60 illustrated in Fig. 4 may be implemented by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each device of the non-terrestrial network 60, each device of the terrestrial network 50, and the user terminal 10 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present disclosure is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present disclosure. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, each device of the non-terrestrial network 60, each device of the terrestrial network 50, and the user terminal 10 have been described by using functional block diagrams. However, the apparatuses may be implemented by hardware, software, or a combination of hardware and software. The software executed by a processor included in each device of the non-terrestrial network 60, each device of the terrestrial network 50 according to an embodiment of the present invention, and the software executed by a processor included in the user terminal 10 according to an embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G and the like.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

Specific operations described in this disclosure as being performed by a base station of the non-terrestrial network 60 may, in some cases, be performed by the upper node. In a network including one or more network nodes including the base station, it is apparent that various operations performed for communicating with the user terminal 10 may be performed by the base station and/or another network node other than the base station (for example, but not limited to, MME or S-GW). According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple user terminals 10 (e.g., may be referred to as D2D (Device-to-Device), V2X (Vehicle-to-Everything), etc.). In this case, the function of the base station described above may be provided by the user terminal 10. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain.
Each of the one or more frames in the time domain may be referred to as a subframe.
The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each the user terminal to allocate radio resources (such as frequency bandwidth, transmission power, etc., that can be used in each the user terminal) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined based on the numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.,) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present international patent application is based on and claims priority to Japanese patent application No. 2020-146155 filed on August 31, 2020, the entire contents of which are hereby incorporated herein by reference.

### [DESCRIPTION OF THE REFERENCE NUMERALS]

- 1: Wireless communication system
- 10: User terminal
- 20: Communication network
- 30: Core network
- 50: Terrestrial network
- 60: Non-terrestrial network
- 60A: Non-terrestrial network
- 60B: Non-terrestrial network
- 61A: Base station
- 61B: Base station
- 62A: NTN gateway
- 62B: NTN gateway
- 63A: Non-terrestrial object
- 63B: Non-terrestrial object
- 110: Transmission unit
- 120: Reception unit
- 130: Control unit
- 210: Transmission unit
- 220: Reception unit
- 230: Control unit

## Claims

1. A terminal comprising:
a reception unit configured to receive information indicating a radio resource for performing wireless communication with a non-terrestrial network, the radio resource being determined based on information related to a radio resource used for wireless communication in a terrestrial network; and
a control unit configured to cause the wireless communication with the non-terrestrial network to be performed using a radio resource in accordance with the information received by the reception unit.

2. The terminal as claimed in claim 1, wherein
the control unit causes the wireless communication with the non-terrestrial network to be performed using a radio resource other than a radio resource used in transmission and reception of a signal for control in the wireless communication in the terrestrial network.

3. The terminal as claimed in claim 1 or 2, wherein
the control unit causes the wireless communication with the non-terrestrial network to be performed using a frequency other than a frequency used in the wireless communication in the terrestrial network.

4. The terminal as claimed in any one of claims 1 to 3, wherein
the control unit performs at least one of:
a process of configuring a radio resource used for uplink in the terrestrial network as a radio resource used for downlink in the non-terrestrial network; and
a process of configuring a radio resource used for downlink in the terrestrial network as a radio resource used for uplink in the non-terrestrial network.

5. A wireless communication method performed by a terminal, the wireless communication method comprising:
receiving information indicating a radio resource for performing wireless communication with a non-terrestrial network, the radio resource being determined based on information related to a radio resource used for wireless communication in a terrestrial network; and
causing the wireless communication with the non-terrestrial network to be performed using a radio resource in accordance with the information received by the receiving.

6. A base station comprising:
a reception unit configured to receive information related to a radio resource used for wireless communication in a terrestrial network; and
a control unit configured to determine a radio resource for performing wireless communication with a terminal, based on the information received by the reception unit.
